(19) Europäisches Patentamt / European Patent Office / Office européen des brevets

(11) **EP 3 535 312 B1**

(12) **EUROPEAN PATENT SPECIFICATION**

(45) Date of publication and mention
of the grant of the patent:
**21.02.2024 Bulletin 2024/08**

(21) Application number: **17797825.1**

(22) Date of filing: **31.10.2017**

(51) International Patent Classification (IPC):
**C08J 3/22** *(2006.01)*     **C08K 3/16** *(2006.01)*

(52) Cooperative Patent Classification (CPC):
(C-Sets available)
**C08J 3/226; C08K 5/02;** C08J 2323/04;
C08J 2423/04; C08J 2423/10; C08K 2003/2296

(Cont.)

(86) International application number:
**PCT/US2017/059217**

(87) International publication number:
**WO 2018/085236 (11.05.2018 Gazette 2018/19)**

(54) **SEMI-CRYSTALLINE POLYOLEFIN-BASED ADDITIVE MASTERBATCH COMPOSITION**

MASTERBATCH-ZUSAMMENSETZUNG AUS HALBKRISTALLINEM POLYOLEFINBASIERTEM ADDITIV

COMPOSITION DE MÉLANGE MAÎTRE D'ADDITIF À BASE DE POLYOLÉFINE SEMI-CRISTALLINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2016 US 201662416415 P
02.11.2016 US 201662416407 P
24.10.2017 US 201762576194 P**

(43) Date of publication of application:
**11.09.2019 Bulletin 2019/37**

(73) Proprietor: **DOW GLOBAL TECHNOLOGIES LLC
Midland, MI 48674 (US)**

(72) Inventors:
• **LI, Dachao
Collegeville
PA 19426 (US)**
• **PERSON, Timothy J.
Collegeville
PA 19426 (US)**
• **COGEN, Jeffrey M.
Collegeville
PA19426 (US)**
• **MUNDRA, Manish K.
Collegeville
PA 19426 (US)**
• **DREUX, Peter C.
Collegeville
PA 19426 (US)**
• **PATEL, Rajen M.
Freeport
TX 77541 (US)**

(74) Representative: **Boult Wade Tennant LLP
Salisbury Square House
8 Salisbury Square
London EC4Y 8AP (GB)**

(56) References cited:
**EP-A1- 1 072 644    EP-A2- 0 501 340
WO-A1-2004/087805    WO-A1-2016/142544
US-A1- 2008 023 680    US-A1- 2008 119 605
US-A1- 2012 101 209**

(52) Cooperative Patent Classification (CPC): (Cont.)

C-Sets
**C08K 5/02, C08L 23/06**

**Description**

FIELD

The field includes a semi-crystalline polyolefin-based additive masterbatch composition, moisture curable polyolefin compositions prepared therewith, methods of making and using same, and articles containing or made from same.

INTRODUCTION

A masterbatch generally is a solid or liquid additive for imparting color (color masterbatch) or other properties (additive masterbatch) to a host material, typically a host polymer. The masterbatch contains a carrier resin and a pigment (color masterbatch) or one or more additives (additive masterbatch). To make a final product, a masterbatch is mixed or blended with a host material to give the final product. The concentration of colorant in the color masterbatch and the concentration(s) of the one or more additives in the additive masterbatch are typically much higher than target concentration(s) thereof in the final product. To make a polyolefin product, a solid masterbatch, usually in the form of granules or pellets, is mixed (e.g., blended) with a solid host polymer, usually in the form of granules or pellets, and the resulting mixture is melted or extruded to make a polyolefin product. Low density polyethylene (LDPE), ethylene/vinyl acetate (EVA) copolymer or ethylene/ethyl acrylate (EEA) copolymer is typically used as a carrier resin for solid masterbatches used to make polyolefin products.

US 6,936,655 B2 to J.S. Borke et al. relates to crosslinkable flame retardant wire and cable compositions having improved abrasion resistance. The compositions are comprised of a high density silane-containing polyethylene base resin which can be a blend of a bimodal HDPE and ethylene-silane copolymer or silane-grafted bimodal HDPE in combination with a flame retardant and silanol condensation catalyst.

EP 2 889 323 A1 to S. Deveci et al. relates to a polymer composition comprising carbon black and a carrier polymer for the carbon black. A masterbatch comprising, preferably consisting of, (I) 20-50 wt% pigment based on the total amount of the masterbatch (100 wt%); (II) at least 40 wt% of at least one carrier polymer which is a multimodal high density polyethylene (HDPE) having an $MFR_2$ of 1 to 20 g/10 min, a density of 940 to 965 kg/m$^3$ (pref 950 to 960) and a Mw/Mn of 5.5 to 20; and (IV) optionally further additives.

US-A-2008/023680 relates to a non-halogen flame-resistant thermoplastic elastomer composition, manufacturing method, and an electric wire or cable in which non-halogen flame-resistant thermoplastic elastomer composition is used for an insulator or a sheath. The non-halogen flame-resistant thermoplastic elastomer composition includes (A) 40 to 80 parts by weight of ethylene-vinyl acetate copolymer, in which the content of vinyl acetate is 30 wt % or more; (B) 60 to 20 parts by weight of crystalline polyolefin resin; and (C) 40 to 250 parts by weight of metalhydroxide for 100 parts by weight in total of (A) and (B). Further, ethylene-vinyl acetate copolymer is cross-linked with silane.

WO-A-2016/142544 relates to a masterbatch for use in a process of preparing a composite material comprising a blend of a first semi-crystalline polymer with at least 5 wt% carbon nanotubes. The masterbatch is blended with a second semi-crystalline polymer miscible with the first one in respective proportions to obtain a composite material containing about 1 wt% of carbon nanotubes wherein said composite material yields an agglomerate area fraction U% lower than 2 and a surface resistivity lower than 105 ohm/sq.

EP-A-1072644 relates to a thermoplastic vulcanizate (TPV) from a blend of a first thermoplastic polyolefin, a second thermoplastic olefin and a rubber. The rubber is crosslinked with a hydrosilylation crosslinking agent. The second polyolefin includes at least one OR group pendant to a Si atom chemically attached via one or more intermediate molecules to said second polyolefin. R can be hydrogen or an alkyl of 1 to 8 carbon atoms. The OR groups can react with the hydrosilylation catalyst to reduce the compression set of the TPV.

WO-A-2004/087805 relates to a masterbatch composition comprising (percent by weight): A) 50%-90% of a crystalline polypropylene component comprising: A ) from 25% to 75% of a fraction having a melt flow rate MFR of from 0.1 to 10 g/10 min.; and A) from 75% to 25% of a fraction having a melt flow rate value MFR equal to or lower than 100 g/10 min.; wherein the ratio MFR /MFR is from 5 to 60; and B) 10%-50% of a copolymer component of ethylene and at least one C3-C10 alpha-olefin, containing from 15% to 50% of ethylene; said masterbatch composition having a value of the intrinsic viscosity [eta] of the fraction soluble in xylene at room temperature equal to or higher than 3.5 dl/g. The masterbatch composition is added to polyolefin materials to obtain final compositions suitable for injection molding.

US-A-2012/101209 relates to nucleation agents for polyethylenes wherein the nucleating agent is composed of one or more finely divided inorganic materials of halloysite that are dispersed throughout the polyethylene to increase the crystallization rate such that the polyethylenes can be more easily extruded, molded with a much shorter cycle time or thermoformed into intricate parts.

EP-A-501340 relates to a filled hydrolyzable silane copolymer composition resistant to crosslinking in the absence of a silanol condensation catalyst comprising a) 20 to 99 weight percent of a random ethylene-vinyltriethoxysilane copolymer having a melt index from 0.1 to 50 and from 0.1 to 20 weight percent vinyltriethoxysilane copolymerized; and b) 1 to 80 weight percent of a particulate filler.

US-A-2008/119605 relates to a master batch composition comprising 10 to 95% by mass of an additive for plastics, 1 to 50% by mass of an olefin polymer which satisfies conditions (i) to (iii) shown below, and 1 to 89% by mass of a polyolefin resin as a carrier, (i) the polymer has a mesopentad fraction [mmmm] of 20 to 80 mol %, (ii) the polymer has a melting point (Tm-D) of 0 to 100° C., defined as a peak top of a peak observed at the highest temperature side in a fusion endothermic curve obtained using a differential scanning calorimeter (DSC) by holding a sample at -10° C. for 5 minutes under a nitrogen atmosphere and then elevating the temperature at a rate of 10° C./minute, and (iii) the polymer has a weight average molecular weight (Mw), measured by a gel permeation chromatography (GPC) method, of 10,000 to 1,000,000 and a Mw/Mn ratio of Mw to Mn of 4 or less, wherein Mn is a number average molecular weight thereof measured by the GPC method.

US 2008/0176981 A1 to M. Biscoglio et al. (BISCOGLIO) relates to a moisture-crosslinkable polymeric composition comprising (a) a silane-functionalized olefinic polymer, (b) an acidic silanol condensation catalyst, and (c) a secondary-amine-containing antioxidant composition. The antioxidant composition can be (1) a secondary amine substituted with two aromatic groups or (2) a combination of a first antioxidant and a secondary amine antioxidant substituted with at least one aromatic group. The moisture-crosslinkable polymeric composition can be used for making fibers, films, pipes, foams, and coatings. The compositions may be applied as a coating over a wire or a cable.

BISCOGLIO's moisture crosslinkable polymeric composition is prepared from a 2-part formulation consisting of an additive package in one part and the (a) silane-functionalized olefinic polymer, such as DFDB-5451 ethylene/silane copolymer, in another part [0037]. The additive package contains, among other constituents, a blended carrier resin of a low density polyethylene, such as the linear low density polyethylene DFH-2065, and an ethylene/ethyl acrylate copolymer, such as DPDA-6182, the (b) acidic silanol condensation catalyst, such as a sulfonic acid, and the (c) secondary amine [0037], [0038] and Table 1. The (c) secondary amine may be substituted with two aromatic groups [0005]. The DFDB-5451 is a host polymer that contains moisture curable silane groups. The moisture crosslinkable polymeric composition is prepared by extruding the additive package at 5 wt% into the DFDB-5451 [0037]. The moisture crosslinkable polymeric composition may be cured with water such as by exposing the composition at 23° C. and 70% relative humidity for two days [0039].

SUMMARY

We (the present inventors) have discovered that standard additive masterbatch compositions that employ carrier resins composed of LDPE or EEA or EVA copolymers suffer from moisture pick-up. Moisture pick-up can lead to premature curing of moisture curable polyolefin compositions prepared therefrom or decomposition of moisture-sensitive additives. Prior flame retardant masterbatch compositions tend to rapidly absorb moisture from the environment, and thus to prevent this often are dried and sealed in bags composed of material having low water transmission rates (WTR), such as aluminum foil bags. Such sealing in aluminum foil bags is costly, and the sealed bags are difficult to transport without careful handling and have to be opened and used promptly by cable makers so as to avoid undesired moisture pickup.

We conceived a technical solution to this problem that inhibits or prevents moisture pickup by using a high density/high crystallinity polyethylene as a carrier for flame retardant additive. Surprisingly, not only can the high density/high crystallinity polyethylene hold high loading levels of flame retardant additive, the resulting masterbatch shows very low moisture pickup rate and beneficial resistance to scorch (premature curing) during extrusion of moisture curable polyolefin compositions containing same. The solution includes a semi-crystalline polyolefin-based additive masterbatch composition, as well as a moisture curable polyolefin composition prepared therewith, methods of making and using same, and articles containing or made from same. The invention is defined in the claims.

DETAILED DESCRIPTION

Examples of embodiments include the following numbered aspects.

Aspect 1. An additive masterbatch composition comprising (A) a semi-crystalline polyolefin carrier resin that consists essentially of any one of (i) to (vi): (i) a semi-crystalline high density polyethylene having a density of from 0.930 to 0.970 g/cm$^3$; (ii) a semi-crystalline polypropylene; (iii) a semi-crystalline ethylene/propylene copolymer; (iv) a semi-crystalline poly(ethylene-co-alpha-olefin) copolymer; (v) a combination (e.g. mixture or blend) of any two or more of (i) and (iv); and the (A) semi-crystalline polyolefin carrier resin (A)has a crystallinity of 76 $\pm$ 1 wt%, as determined by differential scanning calorimetry (DSC) according to ASTM D3418-15 or the Crystallinity Test Method described in the description, and an additive package comprising (B) a flame retardant; wherein (A) is 10 to 90 weight percent (wt%), alternatively 10 to 70 wt%, alternatively 10 to 60 wt%, alternatively 10 to 50 wt%, and the additive package is from 90 to 10 wt%, alternatively 90 to 30 wt%, alternatively 90 to 40 wt%, alternatively 90 to 50 wt%, of total weight (100.00 wt%) of the additive masterbatch composition wherein the (B) flame retardant comprises (B1) a mineral; and wherein the additive masterbatch composition further comprises a flame retardant synergist compound which is antimony trioxide; and wherein the flame retardant synergist is distinct from the (B1) mineral in at least one aspect such as composition or function.

Aspect 2. The additive masterbatch composition of aspect 1 wherein the (A) semi-crystalline polyolefin carrier resin has any one of (i) to (x): (i) a density of at least 0.9.30 $g/cm^3$ and is a polyethylene or a density of 0.89 to 0.90 $g/cm^3$ and is a polypropylene; (ii) a crystallinity of 76 $\pm$ 1 wt% and is a polyethylene; (iii) a

melt flow index (MFI) of 0.1 to 50 grams per 10 minutes (g/10 min.), alternatively 0.5 to 50 g/10 min., alternatively 0.5 to 20 g/10 min., all at 190° C./2.16 kg load and is a polyethylene or a melt flow rate (MFR) of 0.5 to 50 g/10 min. at 230 C./2.16 kg load and is a polypropylene; (iv) a molecular weight distribution (MWD) that is monomodal; (v) a MWD that is bimodal; (vi) both (i) and (ii); (vii) both (i) and (iii); (viii) both (ii) and (iii); (ix) both (iv) and at least one of (i) to (iii); or (x) both (v) and at least one of (i) to (iii).

Aspect 3. The additive masterbatch composition of any one of aspects 1 or 2 further comprising at least one additive selected from: (C) an acidic condensation catalyst; (D) a secondary diarylamine of formula (I): $(R^1\text{-}Ar)_2NH$ (I), wherein each Ar is benzene-1,4-diyl or both Ar are bonded to each other and taken together with the NH of formula (I) constitute a carbazol-3,6-diyl; and each $R^1$ is independently $(C_1\text{-}C_{20})$hydrocarbyl; (E) one or two second antioxidants, each having a structure different than formula (I) and each other; (F) a processing aid; (G) a colorant; (H) a metal deactivator; (I) an (unsaturated carbon-carbon bond)-free hydrolyzable silane; (J) a corrosion inhibitor; (K) a product of a reaction of (C) and (D); (L) a hindered amine light stabilizer; and (M) a combination of (K) and any two or more of additives (C) to (J) and (L). When the additive masterbatch composition further comprises the (K) product of a reaction of (C) and (D), in some aspects is any one of (i) to (iv): (i) the product of a reaction of (C) and (D) comprises a salt formed by an acid/base reaction of (C) and (D); (ii) the additive package further comprises unreacted (C) but not unreacted (D); (iii) the additive package further comprises unreacted (D) but not unreacted (C); or (iv) the additive package further comprises unreacted (C) and unreacted (D). In some aspects at least 50 wt%, alternatively at least 75 wt%, alternatively at least 90 wt% of the combined weight of (C) and (D) is the product of a reaction of (C) and (D).

Aspect 4. A moisture-curable polyolefin composition comprising the additive masterbatch composition of any one of aspects 1 to 3 and a (hydrolyzable silyl group)-functional polyolefin prepolymer; wherein in the (hydrolyzable silyl group)-functional polyolefin prepolymer: (i) each hydrolyzable silyl group is independently a monovalent group of formula (II): $(R^2)_m(R^2)_{3-m}Si\text{-}$ (II); wherein subscript m is an integer of 1, 2, or 3; each $R^2$ is independently H, HO-, $(C_1\text{-}C_6)$alkoxy, $(C_2\text{-}C_6)$carboxy, $((C_1\text{-}C_6)alkyl)_2N\text{-}$, $(C_1\text{-}C_6)alkyl(H)C=NO\text{-}$, or $((C_1\text{-}C_6)alkyl)_2C=NO\text{-}$; and each $R^3$ is independently $(C_1\text{-}C_6)$alkyl or phenyl; (ii) the polyolefin is polyethylene based, poly(ethylene-*co*-$(C_3\text{-}C_{40})$alpha-olefin)-based, or a combination thereof; or (iii) both (i) and (ii). Aspect 5a is any one of (i) to (iii).

Aspect 5. A method of making a moisture-curable polyolefin composition, the method comprising mixing a (hydrolyzable silyl group)-functional polyolefin prepolymer and a divided solid form of the additive masterbatch composition of any one of aspects 1 to 3 so as to give a mixture; and melting or extruding the mixture so as to make the moisture-curable polyolefin composition.

Aspect 6. A moisture-cured polyolefin composition that is a product of moisture curing the moisture curable polyolefin composition of aspect 4, or the composition made by the method of aspect 5, to give the moisture-cured polyolefin composition.

Aspect 7. A manufactured article comprising a shaped form of the moisture-cured polyolefin composition of aspect 6.

Aspect 8. A coated conductor comprising a conductive core and a polymeric layer at least partially surrounding the conductive core, wherein at least a portion of the polymeric layer comprises the moisture-cured polyolefin composition of aspect 6.

Aspect 9. A method of conducting electricity, the method comprising applying a voltage across the conductive core of the coated conductor of aspect 8 so as to generate a flow of electricity through the conductive core.

Additive masterbatch composition. The additive masterbatch composition may contain at least 45 wt%, alternatively at least 50 wt%, alternatively at least 55 wt%, alternatively at least 70 wt%, alternatively at least 80 wt%, alternatively at least 90 wt% of the (A) semi-crystalline polyolefin carrier resin; all based on total weight of the additive masterbatch composition. The additive masterbatch composition may contain from 55 to 1 wt%, alternatively 50 to 1 wt%, alternatively 45 to 1 wt%, alternatively 30 to 1 wt%, alternatively 20 to 1 wt%, alternatively 10 to 1 wt% of the (B) flame retardant. The additive masterbatch composition may be free of: (i) an ethylene/silane copolymer, (ii) an ethylene/vinyl acetate (EVA) copolymer, (iii) an ethylene/alkyl acrylate copolymer (e.g., EEA copolymer), (iv) carbon black; (v) a pigment or colorant; (vi) a filler; (vii) any two, alternatively any six of (i) to (vi). The additive masterbatch composition may have from > 0 to 5 wt% of any other carrier resin such as a low density polyethylene (LDPE), a linear low density polyethylene (LLDPE), an ethylene/alpha-olefin copolymer, an EEA copolymer, a polypropylene, a nylon (e.g., Nylon 6 or 66), a BPA-PC, a polycarbonate, a BPA-PS, a polysulfone, or a polyphenylene oxide; alternatively the additive masterbatch composition may be free of any carrier resin, or any resin, other than the (A) semi-crystalline polyolefin carrier resin.

The additive masterbatch composition may further comprise the (G) colorant and may be characterized as a color masterbatch composition. The (G) colorant may be a pigment (e.g., carbon black or titanium dioxide), a dye, or a phosphor; alternatively titanium dioxide or a phosphor. The color masterbatch composition may be free of a HDPE.

The additive masterbatch composition may further comprise a filler and may be characterized as a filler masterbatch composition. The filler may be calcium carbonate, zinc borate, zinc molybdate, zinc sulfide, carbon black, talc, magnesium oxide, zinc oxide, or a clay. Alternatively, the filler masterbatch composition may be free of a HDPE.

Alternatively, the additive masterbatch composition may be free of (i) (G) colorant, (ii) filler, (iii) both (i) and (ii).

Constituent (A) semi-crystalline polyolefin carrier resin. The semi-crystalline polyolefin carrier resin may be a semi-crystalline polyethylene that is a semi-crystalline medium density polyethylene (MDPE), a semi-crystalline high density polyethylene (HDPE), or a combination thereof.

The (A) semi-crystalline polyolefin carrier resin may have a density of at least 0.925 g/cm$^3$, alternatively at least 0.930 g/cm$^3$, alternatively at least 0.935 g/cm$^3$, alternatively at least 0.940 g/cm$^3$. The semi-crystalline HDPE may have a maximum density of 0.970 g/cm$^3$, alternatively at most 0.960 g/cm$^3$, alternatively at most 0.950 g/cm$^3$. The semi-crystalline HDPE may have a density of from 0.930 to 0.970 g/cm$^3$, alternatively 0.935 to 0.965 g/cm$^3$. The density of the (A) may be measured by ASTM D-1505, *Test Method for Density of Plastics by the Density-Gradient Technique.*

The (A) semi-crystalline polyolefin carrier resin has a crystallinity of 76 $\pm$ 1 wt%. The crystallinity of a semi-crystalline polyolefin resin, such as (A) semi-crystalline polyolefin carrier resin, may be determined by differential scanning calorimetry (DSC) according to ASTM D3418-15 or the Crystallinity Test Method described later. For a semi-crystalline polyethylene resin, wt% crystallinity = ($\Delta H_f$*100%)/292 J/g. For a semi-crystalline polypropylene resin, wt% crystallinity = ($\Delta H_f$*100%)/165 J/g. In the respective equations $\Delta H_f$ is the second heating curve heat of fusion for the polyethylene resin or polypropylene resin, as the case may be, * indicates mathematical multiplication, / indicates mathematical division, 292 J/g is a literature value of the heat of fusion ($\Delta H_f$) for a 100% crystalline polyethylene, and 165 J/g is a literature value of the heat of fusion ($\Delta H_f$) for a 100% crystalline polypropylene. Preferably, crystallinity is determined by DSC according to the Crystallinity Test Method described later.

The (A) semi-crystalline polyolefin carrier resin may have a melt flow index (MFI) of 10 to 20 g/10 min., alternatively 0.1 to 10 g/10 min., alternatively 0.20 to 9 g/10 min. The MFI may be determined by ASTM D1238 (2.16 kilograms (kg), 190° C.)

The (A) semi-crystalline polyolefin carrier resin may be characterized by a molecular weight distribution (MWD) that is monomodal, alternatively bimodal.

The (A) semi-crystalline polyolefin carrier resin may be a semi-crystalline HDPE that is bimodal and has a density of from 0.950 to 0.958 g/cm$^3$ and a MFI of from 0.20 to 0.40 g/10 min. The (A) semi-crystalline polyolefin carrier resin may be a semi-crystalline HDPE that is monomodal and has a density of from 0.930 to 0.970 g/cm$^3$ and a MFI of from 0.65 to 9 g/10 min., alternatively a density from 0.935 to 0.965 g/cm$^3$ and a MFI from 0.7 to 8.5 g/10 min.

Constituent (B) flame retardant. The (B) flame retardant is a compound that inhibits or delays the spread of fire by suppressing chemical reactions in a flame. The (B) flame retardant comprises (B1) a mineral.

The (B1) may be amorphous or crystalline. The (B1) mineral may be a metal hydroxide, an alumina, ammonium octamolybdate, a calcium carbonate, a clay, a mica, an organo-modified clay, a red phosphorous, a silica, a talc, a titanium oxide, a wollastonite, or a zinc borate. The metal hydroxide may be an aluminum hydroxide such as aluminum trihydroxide, a calcium hydroxide, or a magnesium hydroxide, or a combination of any two or more thereof. The additive masterbatch composition comprises the (B1) mineral and further comprises a flame retardant synergist compound. The flame retardant synergist compound is an additive that enhances (increases) flame retarding properties of the (B1) mineral and is distinct from the (B1) mineral in at least one aspect such as composition or function. Flame retardant synergist compounds are useful as additives in wire and cable insulation formulations. The flame retardant synergist compound is antimony trioxide.

In some aspects the (B) flame retardant comprises, or consists of, the (B2) organohalogen compound. The (B2) may contain on average per molecule 1, 2, 3, or more halogen atoms bonded to carbon atom(s). When all C-H bonds are formally replaced by C-halogen bonds in the (B2) organohalogen compound, the (B2) is a perhalogenated organic compound. Each halogen of (B2) independently may be F, Cl, Br, or I; alternatively F, Cl, or Br; alternatively F or Cl; alternatively F or Br; alternatively Cl or Br; alternatively F; alternatively Cl; alternatively Br.

In some aspects each halogen of (B2) is a chlorine atom. Examples of such (B2) are perchloropentacyclodecane; Diels-Alder adducts of hexachlorocyclopentadiene with "enes" such as maleic anhydride; tetrachlorobisphenol A; tetrachlorophthalic anhydride; and hexachloroendomethylenetetrahydrophthalic acid.

In some aspects each halogen of (B2) is a bromine atom (Br). In some aspects (B2) is an organobromine compound, alternatively a perbrominated organic compound, which are not oligomers or polymers. In some aspects the organobromine compound is a decabromodiphenylethane; a N,N'-ethylenebis(3,4,5,6-tetrabromophthalimide); hexabromobenzene; pentabromoethylbenzene 2,4,6-tribromophenol; tribromophenyl allyl ether; octaobromodiphenyl; poly(pentabromobenzyl)acrylate; pentabromodiphenyl ether; octabromodiphenyl ether; decabromodiphenyl ether; tetrabromobisphenol A; bis(dibromopropyl)ether of tetrabromobisphenol A; tetrabromophthalic anhydride; ethylene-bis(tetrabromophthalimide); and hexabromocyclododecane.

In some aspects the (B) flame retardant comprises, or consists of, (B2) that is a poly(bromo-substituted organic monomer) polymer. Examples of the poly(bromo-functional organic monomer) polymers are a poly(monobromostyrene); a poly(vinyl bromide); a poly(vinylidene bromide); a poly(bromo-alkyl acrylate) such as poly(2-bromoethyl methacrylate) and poly(2,3-dibromopropyl methacrylate); a poly(alkyl bromo-acrylate) such as poly(methyl-α-bromoacrylate). Examples of the poly(monobromostyrene) are poly(4-bromostyrene) and poly(2-bromostyrene). Examples of the poly(bromo-alkyl acrylate) are a poly(2-bromoethyl methacrylate) and a poly(2,3-dibromopropyl methacrylate).

In some aspects the (B) flame retardant comprises, or consists of, (B2) that is a brominated poly(organic monomer) polymer. The brominated poly(organic monomer) polymer is formed by brominating a poly(organic monomer) polymer. Examples of the brominated poly(organic monomer) polymer are brominated polystyrene; brominated natural and synthetic rubber; brominated butadiene styrene copolymer; brominated poly(organic monomer) polymer of WO 2014/014648 A2; brominated poly(organic monomer) polymers of US 5,066,752; brominated organic polymer of Polymer Degradation and Stability, 1989; 25(1):1-9; and brominated (butadiene/vinylarene monomer) copolymers such as a brominated styrene/butadiene random copolymer or a brominated styrene/butadiene block copolymer (Br-SBC), such as Emerald Innovation™ 3000 having Mw greater than (>) 100,000 g/mol and CAS No. 1195978-93-8. Suitable brominated (butadiene/vinylarene monomer) copolymers, including BR-SBC, and processes for their synthesis are found in US 7,851,558 B2.

The (B2) that is a poly(bromo-substituted organic monomer) polymer or a brominated poly(organic monomer) polymer independently may have a weight average molecular weight (Mw) of greater than or equal to (≥) 1,000 grans per mole (g/mol), alternatively ≥ 10,000 g/mol, alternatively ≥ 25,000 g/mol, alternatively ≥ 50,000 g/mol, alternatively ≥ 100,000 g/mol; and in some aspects Mw less than (<) 2,000,000 g/mol, alternatively < 1,000,000 g/mol; alternatively < 500,000 g/mol.

Examples of other halogenated compounds useful as (B2) are found in US 6,936,655.

In some aspects the (B) flame retardant may be at least 1 wt%, alternatively at least 10 wt%, alternatively at least 25 wt%, alternatively at least 35 wt%, alternatively at least 45 wt%; and at most 60 wt%, alternatively at most 50 wt%, alternatively at most 45 wt% of the additive masterbatch composition.

Optional constituent (additive) (C) acidic condensation catalyst. The constituent (C) is suitable for condensation curing the hydrolyzable silyl groups of the (A) (hydrolyzable silyl group)-functional polyolefin prepolymer. The (C) may be a Lewis acid, alternatively a Bronsted acid, alternatively a combination of a Lewis acid and a Bronsted acid. As used herein "Lewis acid" means a molecule or ion that is an electron pair acceptor in neutral water to give a potential of hydrogen (pH) of 6.9 or lower. As used herein "Bronsted acid" means a molecule that is a proton ($H^+$) donor in neutral water to give a potential of hydrogen (pH) of 6.9 or lower. In some aspects (C) is any one of Bronsted acids (i) to (vii): (i) an organosulfonic acid, an organophosphonic acid, or a hydrogen halide; (ii) an organosulfonic acid; (iii) an alkyl-substituted arylsulfonic acid; (iv) an alkyl-substituted arylsulfonic acid wherein there is/are 1 or 2 ($C_5$-$C_{20}$)alkyl substituent(s) and 1 aryl group that is phenyl or naphthyl; (v) a ($C_1$-$C_5$)alkylphosphonic acid, wherein the ($C_1$-$C_5$)alkyl is unsubstituted or substituted with one -$NH_2$ group; (vi) HF, HCl, or HBr; or (vii) a combination of any two or more of (i) to (vi). In some aspects the (C) is an organosulfonic acid. Examples of suitable organosulfonic acids are 4-methylphenylsulfonic acid, dodecylbenzenesulfonic acid, alkylnaphthylsulfonic acids, and organosulfonic acids in WO 2006/017391; EP 0736065; and US 6441097. In some aspects (C) is any one of Lewis acids (i) to (v): (i) a transition metal-carboxylate compound or a transition metal-halide compound, wherein the transition metal is an element of any one of Groups 3 to 13 of the Periodic Table of the Elements and each halide is Cl or Br; (ii) the transition metal-carboxylate compound; (iii) the transition metal-carboxylate compound wherein the transition metal is tin, zinc, copper, iron, lead, or titanium; (iv) the transition metal-carboxylate compound wherein each carboxylate independently is a ($C_1$-$C_{30}$)alkylcarboxylate, alternatively a ($C_5$-$C_{30}$)alkylcarboxylate, alternatively a ($C_{10}$-$C_{30}$)alkylcarboxylate, alternatively a ($C_{10}$-$C_{20}$)alkylcarboxylate, alternatively a ($C_{10}$-$C_{18}$)alkylcarboxylate; and (v) dibutyltin dilaurate.

The (C) may be present in the moisture-curable polyolefin composition at a concentration from 0.01 to 0.50 wt%, alternatively at least 0.05 wt%, alternatively at least 0.10 wt%; and alternatively at most 0.3 wt%, alternatively at most 0.2 wt%; all based on total weight of the moisture-curable polyolefin composition.

Optional constituent (additive) (D) secondary diarylamine of formula (I): ($R^1$-Ar)$_2$NH (I), wherein Ar and $R^1$ are as defined above. (D) may function as an antioxidant. In some aspects of the (D) secondary diarylamine of formula (I): (i) each Ar is benzene-1,4-diyl; (ii) both Ar are bonded to each other and taken together with the NH of formula (I) constitute a carbazol-3,6-diyl; (iii) each $R^1$ is independently ($C_1$-$C_{10}$)hydrocarbyl; (iv) each $R^1$ is independently ($C_7$-$C_{20}$)hydrocarbyl; (v) each $R^1$ is independently benzyl, 1-phenylethyl, or 1-methyl-1-phenylethyl; (vi) 1-methyl-1-phenylethyl; (vii) both (i) and any one of (iii) to (vi); or (viii) both (ii) and any one of (iii) to (vi).

Examples of suitable constituent (D) are 3,6-dibenzylcarbazole; bis(4-benzylphenyl)amine, bis(4-(1-phenylethyl)phenyl)amine, and bis(4-(1-methyl-1-phenylethyl)phenyl)amine. In some aspects of the moisture-curable polyolefin composition, the concentration of constituent (D) is greater than, alternatively at least 1.1 times (1.1 x) greater than, alternatively at least 1.2 x greater than, alternatively at least 1.3 x greater than the concentration of any acidic condensation catalyst. In such aspects of the moisture-curable polyolefin composition, the concentration of constituent (D) is less than 1.6 x, alternatively less than 1.5x, alternatively less than 1.4x the concentration of acidic condensation catalyst.

Optional constituent (additive) (E) one or two second antioxidants. Each of the one or two (E) independently have a structure that is different than that of formula (I) and each other. In some aspects constituent (E) is 1 second antioxidant. In other aspects constituent (E) is two second antioxidants. Examples of suitable second antioxidants are polymerized 1,2-dihydro-2,2,4-trimethylquinoline (Agerite MA); tris(4-tert-butyl-3-hydroxy-2,6-dimethylbenzyl)-s-triazine-2,4,6-(1H,3H,5H)trione (Cyanox 1790); distearyl-3,3-thiodiproprionate (DSTDP); tetrakismethylene (3,5-di-tert-butyl-4-hydroxyhydrocinnamate) methane (Irganox 1010); 1,2-bis(3,5-di-tert-butyl-4-hydroxyhydrocinnamoyl)hydrazine (Irganox 1024); bis(4,6-dimethylphenyl)isobutylidene (Lowinox 22IB46); and 4,4-thiobis(2-tert-butyl-5-methylphenol) (TBM6). To remove all doubt, the additive masterbatch composition and moisture-curable polyolefin composition independently may further comprise (D), but not (E); alternatively may further comprise (E) but not (D); alternatively may further comprise (D) and (E).

Optional constituent (additive) (F) processing aid. Constituent (F) may improve flow of a melt of the additive masterbatch composition through a machine. (F) may be an organic processing aid such as a fluoropolymer or a silicone processing aid such as a polyorganosiloxane or fluoro-functionalized polyorganosiloxane. The constituent (F) may be used at a concentration of from 1 to 20 wt%, alternatively 2 to 18 wt%, alternatively 3 to 15 wt%, based on total weight of the additive masterbatch composition.

Optional constituent (additive) (G) a colorant. E.g., a pigment or dye. E.g., carbon black or titanium dioxide. The carbon black may be provided as a carbon black masterbatch that is a formulation of poly(1-butene-co-ethylene) copolymer (from $\geq$ 95 wt% to < 100 wt% of the total weight of the masterbatch) and carbon black (from > 0 wt% to $\leq$ 5 wt% of the total weight of the masterbatch). The (G) colorant may be from 0.1 to 35 wt%, alternatively 1 to 10 wt%, based on total weight of the moisture-curable polyolefin composition.

Optional constituent (additive) (H) a metal deactivator. E.g., oxaylyl bis(benzylidene hydrazide) (OABH). Constituent (H) may be from 0.001 to 0.2 wt%, alternatively 0.01 to 0.15 wt%, alternatively 0.01 to 0.10 wt%, all based on total weight of the moisture-curable polyolefin composition.

Optional constituent (additive) (I) (unsaturated carbon-carbon bond)-free hydrolyzable silane. Useful for scavenging moisture. Constituent (I) may be any monosilane containing at least 1, alternatively at least 2, alternatively at least 3, alternatively 4 hydrolyzable groups (e.g., $R^2$ as defined above); and at most 3, alternatively at most 2, alternatively at most 1, alternatively 0 non-hydrolyzable (unsaturated carbon-carbon bond)-free groups such as alkyl or aryl groups. Examples of (I) are acetoxytrimethylsilane, 4-benzylphenylsulfonoxytributylsilane, dimethylamino-methoxy-dioctylsilane, octyltrimethoxysilane, and tetramethoxysilane. Constituent (I) may be from 0.1 to 2 wt%, alternatively 0.1 to 1.5 wt%, alternatively 0.1 to 1.0 wt%; all based on total weight of the moisture-curable polyolefin composition.

Optional constituent (additive) (J) a corrosion inhibitor. E.g., tin (II) sulfate. Constituent (J) may be from 0.00001 to 0.1 wt%, alternatively 0.0001 to 0.01 wt%, based on total weight of the moisture-curable polyolefin composition.

Optional constituent (additive) (L) hindered amine light stabilizer. The (L) is a compound that inhibits oxidative degradation. Examples of suitable (L) are butanedioic acid dimethyl ester, polymer with 4-hydroxy-2,2,6,6-tetramethyl-1-piperidine-ethanol (CAS No. 65447-77-0, commercially LOWILITE 62); and poly[[6-[(1,1,3,3-tetramethylbutyl)amio]-1,3,5-triazine-2,4-diyl][(2,2,6,6-tetramethyl-4-piperidinyl)imino]-1,6 hexanediyl[(2,2,6,8-tetramethyl-4-piperidinyl)imino]]) (CAS 71878-19-8/70624-18-9, Chimassorb 994 LD, BASF).

Optional constituents (additives) (M) a combination of (K) and any two or more of additives (C) to (J) and (L). In some aspects the additive masterbatch composition may comprise carrier resin (A) and an additive package comprising (B), (K), (E) and (L).

The additive masterbatch composition may further comprise other optional constituents (additives) selected from a lubricant and an anti-blocking agent.

Moisture-curable polyolefin composition. The total weight of all constituents and additives in the moisture-curable polyolefin composition is 100.00 wt%. The moisture-curable polyolefin composition may further comprise water. The additive masterbatch composition may be at a concentration of from 0.1 to 10 wt%, alternatively from 0.5 to 7 wt%, alternatively from 1 to 6 wt%, of the moisture-curable polyolefin composition; all based on total weight of the moisture-curable polyolefin composition.

The moisture-curable polyolefin composition may be a one-part formulation, alternatively a two-part formulation. The two-part formulation may comprise first and second parts, wherein the first part consists essentially of a (hydrolyzable silyl group)-functional polyolefin prepolymer; wherein the second part consists essentially of the additive masterbatch composition.

In some aspects of the moisture-curable polyolefin composition, the divided solid form of the additive master batch composition may comprise granules and/or pellets. Prior to the mixing step used to prepare the moisture-curable polyolefin composition, the (hydrolyzable silyl group)-functional polyolefin prepolymer also may be in a divided solid form (e.g., granules or pellets).

In some aspects of the moisture-curable polyolefin composition, the additive masterbatch composition may further comprise constituents (D) and (E) and the amount of the additive masterbatch composition used may be such that the (D), or the ad rem portion of the (K) product of reaction prepared from (C) and (D), is (i) from > 0.200 weight percent (wt%) to 0.500 wt%; (ii) from 0.220 wt% to 0.500 wt%, (iii) from 0.250 wt% to 0.50 wt%, or (iv) from 0.220 wt% to 0.40 wt%; all based on total weight of the moisture-curable polyolefin composition.

The (hydrolyzable silyl group)-functional polyolefin prepolymer ("Host Polymer"). The polyolefin of the Host Polymer may be polyethylene based, which means that the prepolymer has a backbone formed by polymerization of ethylene. Alternatively, the Host Polymer may be poly(ethylene-co-$(C_3-C_{40})$alpha-olefin)-based, which means that the prepolymer has a backbone formed by copolymerization of ethylene and at least one alpha-olefin. Host Polymer may be a reactor copolymer of ethylene and an alkenyl-functional hydrolyzable silane. The alkenyl-functional hydrolyzable silane may be of formula (III) $(R^2)_m(R^3)_{3-m}Si-(C_2-C_6)$alkenyl (III), wherein m, $R^2$, and $R^3$ are as defined above for formula (II). The $(C_2-C_6)$alkenyl may be vinyl, allyl, 3-butenyl, or 5-hexenyl. In some aspects the Host Polymer is a reactor copolymer of ethylene and vinyltrimethoxysilane. Vinyltrimethoxysilane is an example of the alkenyl-functional hydrolyzable silane of formula (III) wherein subscript m is 3, each $R^2$ is a $(C_1-C_6)$alkoxy, specifically methoxy; and the $(C_2-C_6)$alkenyl is vinyl ($-C(H)=CH_2$). Alternatively, Host Polymer may be a reactor copolymer of ethylene, an alpha-olefin, and the alkenyl-functional hydrolyzable silane, such as in US 6,936,671. Alternatively, Host Polymer may be a homopolymer of ethylene having a carbon atom backbone having the hydrolyzable silyl groups grafted thereonto, such as a polymer made by a process (e.g., a SIOPLAS™ process) comprising reactively grafting a hydrolyzable unsaturated silane (e.g., vinyltrimethoxysilane) in a post-polymerization compounding or extruding step, typically facilitated by a free radical initiator such as a dialkyl peroxide, and isolating the resulting silane-grafted polymer. The grafted polymer may be for used in a subsequent fabricating step. Alternatively, Host Polymer may be a copolymer of ethylene and one or more of $(C_3-C_{40})$alpha-olefins and unsaturated carboxylic esters (e.g., (meth)acrylate alkyl esters), wherein the copolymer has a backbone having the hydrolyzable silyl groups grafted thereonto, such as made by a SIOPLAS™ process. Alternatively, Host Polymer may be a mixture of ethylene, a hydrolyzable silane such as the alkenyl-functional hydrolyzable silane of formula (III), and a peroxide suitable for use in a process (e.g., a MONOSIL™ process) comprising reactively grafting a hydrolyzable unsaturated silane (e.g., vinyltrimethoxysilane) in a post-polymerization compounding or extruding step, typically facilitated by a free radical initiator such as a dialkyl peroxide, and using the resulting silane-grafted polymer immediately (without isolation) in a subsequent fabricating step. Alternatively, Host Polymer may be a mixture of a copolymer of ethylene and one or more of $(C_3-C_{40})$alpha-olefins and unsaturated carboxylic esters, a hydrolyzable silane such as the alkenyl-functional hydrolyzable silane of formula (III), and a peroxide, suitable for use in a SIOPLAS™ or MONOSIL™ process. The alpha-olefin may be a $(C_3-C_{40})$alpha-olefin, alternatively a $(C_3-C_{20})$alpha-olefin, alternatively a $(C_3-C_{10})$alpha-olefin. The alpha-olefin may have at least four carbon atoms (i.e., be a $(C_4)$alpha-olefin or larger). Examples of the $(C_3-C_{10})$alpha-olefin are propylene, 1-butene, 1-hexene, 1-octene, and 1-decene. The peroxide may be an organic peroxide such as described in WO 2015/149634 A1, page 5, line 6, to page 6, line 2. The organic peroxide, when present, may be used at a concentration of from 0.02 to 2 wt%, alternatively 0.04 to 2 wt%, alternatively 0.04 to 1 wt%, alternatively 0.04 to 0.08 wt%, based on total weight of the moisture-curable polyolefin composition. Host Polymer may be present in the moisture-curable polyolefin composition at a concentration from 40 to 99.78 wt%, alternatively at least 50 wt%, alternatively at least 60 wt%; and alternatively at most 99 wt%, alternatively at most 95 wt%, alternatively at most 80 wt%; all based on total weight of the moisture-curable polyolefin composition.

The (hydrolyzable silyl group)-functional polyolefin prepolymer (Host Polymer) may be: (i) a reactor copolymer of ethylene and a hydrolyzable silane; (ii) a reactor copolymer of ethylene, a hydrolyzable silane, and one or more alpha-olefins and unsaturated carboxylic esters (e.g., US 6,936,671); (iii) a homopolymer of ethylene having a carbon backbone and a hydrolyzable silane grafted to the carbon backbone (e.g., made by the SILOPAS™ process); (iv) a copolymer of ethylene, one or more alpha-olefins and unsaturated carboxylic esters, having backbone and a hydrolyzable silane grafted to its backbone (e.g., made by the SILOPAS™ process); (v) a copolymer formed from a mixture of ethylene, hydrolyzable silane, and organic peroxide (e.g., made by the MONOSIL™ process); or (vi) a copolymer formed from a mixture of ethylene, and one or more alpha-olefins and unsaturated carboxylic esters, a hydrolyzable silane, and an organic peroxide (e.g., made by the MONOSIL™ process).

The additive masterbatch and moisture-curable polyolefin compositions may be referred to as unfilled compositions when fillers are absent therefrom. Aspects of the unfilled composition may be made by any suitable means. For example, an unfilled additive masterbatch composition that contains constituents (A) and (B), but does not contain filler, may be made in a Brabender batch mixer by blending the constituents for 3 minutes at 180° C. melt temperature using cam blades at 30 rotations per minute (rpm) to give an unfilled melt mixture, and then allowing the unfilled melt mixture to cool to give the embodiments of the unfilled composition.

The filler additive masterbatch composition and moisture-curable polyolefin composition prepared therefrom may be referred to as filled compositions. Embodiments of the filled compositions may also be made by any suitable means. For example, embodiments of the filled additive masterbatch composition may be made in a Brabender batch mixer using 180° C. melt temperature by first adding the constituents (A) and (B), and optionally (C) and/or (D), into the mixer. Once the constituents (A), (B), and, when present (C) and/or (D), have started melting, then add a filler, and optionally zero, one or more of additives(s) (E) one or two second antioxidants, followed by any other additives (F), (G), (H), (I), and/or (J), at flux to give a filled melt mixture. Then homogenize the filled melt mixture for about 3 minutes, and allow the filled melt mixture to cool to give the embodiments of the filler additive masterbatch composition.

Test samples of embodiments of unfilled and filled compositions may be separately made into compression molded plaques. The mechanical properties of these compositions may be characterized using test samples cut from the compression molded plaques.

Any compound herein includes all its isotopic forms, including natural abundance forms and/or isotopically-enriched forms. The isotopically-enriched forms may have additional uses, such as medical or anti-counterfeiting applications, wherein detection of the isotopically-enriched form is helpful in treatment or investigation.

The following apply unless indicated otherwise. Alternatively precedes a distinct embodiment. ASTM means the standards organization, ASTM International, West Conshohocken, Pennsylvania, USA. IEC means the standards organization, International Electrotechnical Commission, Geneva, Switzerland. Any comparative example is used for illustration purposes only and shall not be prior art. Free of or lacks means a complete absence of; alternatively not detectable. IUPAC is International Union of Pure and Applied Chemistry (IUPAC Secretariat, Research Triangle Park, North Carolina, USA). May confers a permitted choice, not an imperative. Operative means functionally capable or effective. Optional(ly) means is absent (or excluded), alternatively is present (or included). PPM are weight based. Properties are measured using a standard test method and conditions for the measuring (e.g., viscosity: 23° C and 101.3 kPa). Ranges include endpoints, subranges, and whole and/or fractional values subsumed therein, except a range of integers does not include fractional values. Room temperature is 23° C. $\pm$ 1° C. Substituted when referring to a compound means having, in place of hydrogen, one or more substituents, up to and including per substitution.

Advantageously we discovered that the additive masterbatch composition is slow to pick up moisture. Thus, the additive masterbatch composition may have a shelf-life that is longer than a comparative composition that does not contain (A) before it is used to prepare the moisture-curable polyolefin composition. The moisture-curable polyolefin composition may be more resistant to moisture-induced scorch (premature curing) during extrusion thereof, such as during extrusion of the moisture-curable polyolefin composition as a coating on a cable such as a power cable, compared to compositions that do not contain the additive masterbatch composition. Also, the resulting extruded coating of the moisture-curable polyolefin composition may have moisture-induced lower porosity. Moisture-induced porosity can lead to failure of cables during electrical and/or mechanical testing. The moisture-cured polyolefin composition has satisfactory extent of crosslinking and has good heat aging performance under several different test conditions. Also, the moisture-cured polyolefin composition has good mechanical properties such as tensile strength and elongation-at-break. The additive masterbatch composition inhibits or prevents moisture pick-up and premature curing of moisture curable polyolefin compositions and/or decomposition of moisture-sensitive additives. The additive masterbatch composition may also inhibit or prevent phase separation or exudation of additive components. These characteristics make the moisture-cured polyolefin composition useful in a variety of applications including as a component of a coating of a coated conductor such as a coated wire or coated cable.

Additive Masterbatch Composition Preparation Methods. Melt blend constituents of the additive masterbatch compositions (of comparative and inventive examples) either in a Banbury compounder using a compounding temperature of 150° C., rotor speed of 30 rotations per minute (rpm). All resulting additive masterbatch compositions were dried at 70° C. for 24 hours before being used in moisture pickup studies or to prepare coated conductors.

Crystallinity Test Method. For determining crystallinity in wt% of a semi-crystalline polyolefin resin such as (A) semi-crystalline polyolefin carrier resin. Determine melting peaks and weight percent (wt%) crystallinity using DSC instrument DSC Q1000 (TA Instruments) as follows. (A) Baseline calibrate instrument. Use software calibration wizard. First obtain a baseline by heating a cell from -80° to 280° C. without any sample in an aluminum DSC pan. Then use sapphire standards as instructed by the calibration wizard. The analyze 1 to 2 milligrams (mg) of a fresh indium sample by heating the standards sample to 180° C., cooling to 120° C. at a cooling rate of 10° C./minute, then keeping the standards sample isothermally at 120° C. for 1 minute, followed by heating the standards sample from 120° to 180° C. at a heating rate of 10° C./minute. Determine that indium standards sample has heat of fusion ($H_f$) = 28.71 $\pm$ 0.50 Joules per gram (J/g) and onset of melting = 156.6° $\pm$ 0.5° C. Perform DSC measurements on test samples using same DSC instrument. For polyethylene test samples see procedure (B) below. For polypropylene test samples see procedure (C) below.

(B) DSC on Polyethylene Test Samples. Press test sample of polymer into a thin film at a temperature of 160° C. Weigh 5 to 8 mg of test sample film in DSC pan. Crimp lid on pan to seal pan and ensure closed atmosphere. Place sealed pan in DSC cell, equilibrate cell at 30° C., and heat at a rate of about 100° C./minute to 140° C., keep sample at 140° C. for 1 minute, cool sample at a rate of 10° C./minute to 0° C. or lower (e.g., -40° C.) to obtain a cool curve heat of fusion ($H_f$), and keep isothermally at 0° C. or lower (e.g., -40° C.) for 3 minutes. Then heat sample again at a rate of 10° C./minute to 180° C. to obtain a second heating curve heat of fusion ($\Delta H_f$). Using the resulting curves, calculate the cool curve heat of fusion (J/g) by integrating from the beginning of crystallization to 10° C. Calculate the second heating curve heat of fusion (J/g) by integrating from 10° C. to the end of melting. Measure weight percent crystallinity (wt% crystallinity) of the polymer from the test sample's second heating curve heat of fusion ($\Delta H_f$) and its normalization to the heat of fusion of 100% crystalline polyethylene, where wt% crystallinity = ($\Delta H_f$*100%)/292 J/g, wherein $\Delta H_f$ is as defined above, * indicates mathematical multiplication, / indicates mathematical division, and 292 J/g is a literature value of heat of fusion ($\Delta H_f$) for a 100% crystalline polyethylene.

(C) DSC on Polypropylene Test Samples. Press test sample of polypropylene into a thin film at a temperature of 210° C. Weigh 5 to 8 mg of test sample film in DSC pan. Crimp lid on pan to seal pan and ensure closed atmosphere. Place sealed pan in DSC cell and heat at a rate of about 100° C./minute to 230° C., keep sample at 230° C. for 5 minutes, cool sample at a rate of 10° C./minute to -20° C. to obtain a cool curve heat of fusion, and keep isothermally at -20° C. for 5 minutes. Then heat sample again at a rate of 10° C./minute until melting is complete to obtain a second heating curve heat of fusion (($\Delta H_f$)). Using the resulting curves, calculate the cool curve heat of fusion (J/g) by integrating from the beginning of crystallization to 10° C. Calculate the second heating curve heat of fusion (J/g) by integrating from 10° C. to the end of melting. Measure weight percent crystallinity (wt% crystallinity) of the polymer from the test sample's second heating curve heat of fusion ($\Delta H_f$) and its normalization to the heat of fusion of 100% crystalline polypropylene, where wt% crystallinity = ($\Delta H_f$*100%)/165 J/g, wherein $\Delta H_f$ is as defined above, * indicates mathematical multiplication, / indicates mathematical division, and 165 J/g is a literature value of heat of fusion_($\Delta H_f$) for a 100% crystalline polypropylene.

In other aspects the crystallinity is at room temperature of the semi-crystalline polyolefin (e.g., the semi-crystalline medium density polyethylene, semi-crystalline high density polyethylene, or the semi-crystalline poly(ethylene-co-alpha-olefin) copolymer (collectively "semi-crystalline ethylenic (co) polymer")) and is calculated using the following equation.

$$\text{Wt\% crystallinity} = \frac{\rho_c}{\rho}\left(\frac{\rho - \rho_a}{\rho_c - \rho_a}\right),$$

wherein $\rho$ = density of the semi-crystalline ethylenic (co) polymer (g/cm$^3$ at 23 C.), $\rho_a$ = density of amorphous fraction (0.855 g/cm$^3$), and $\rho_c$ = density of crystalline fraction (1.00 g/cm$^3$). Determine melting peaks and percent (%) or weight percent (wt%) crystallinity of the semi-crystalline ethylenic (co) polymer using Differential Scanning Calorimeter (DSC) instrument DSC Q1000 (TA Instruments). First baseline calibrate the DSC instrument and then perform the DSC measurement.

Baseline calibration of DSC instrument. Use software calibration wizard. First obtain a baseline by heating a cell from -80° to 280°C without any sample in an aluminum DSC pan. Then use sapphire standards as instructed by the calibration wizard. Then analyze 1 to 2 milligrams (mg) of a fresh indium sample by heating the standards sample to 180° C., cooling to 120° C. at a cooling rate of 10° C./minute, then keeping the standards sample isothermally at 120° C. for 1 minute, followed by heating the standards sample from 120° to 180° C. at a heating rate of 10° C./minute. Determine that indium standards sample has heat of fusion = 28.71 ± 0.50 Joules per gram (J/g) and onset of melting = 156.6° ± 0.5°C.

Perform DSC measurements on test samples using same DSC instrument. Press test sample of semi-crystalline ethylenic (co) polymer into a thin film at a temperature of 160° C. Weigh 5 to 8 mg of test sample film in DSC pan. Crimp lid on pan to seal pan and ensure closed atmosphere. Place sealed pan in DSC cell, equilibrate cell at 30° C., and heat at a rate of about 100° C./minute to 190° C. Keep sample at 190° C. for 3 minutes, cool sample at a rate of 10° C./minute to -60°C. to obtain a cool curve heat of fusion (Hf), and keep isothermally at -60°C for 3 minutes. Then reheat sample at a rate of 10° C./minute to 190° C. to obtain a second heating curve heat of fusion ($\Delta$Hf). Using the second heating curve, calculate the "total" heat of fusion (J/g) by integrating from -20° C. (in the case of semi-crystalline ethylenic (co) polymers except poly(ethylene-co-alpha-olefin) copolymers of density greater than or equal to 0.90 g/cm$^3$) or -40° C (in the case of poly(ethylene-co-alpha-olefin) copolymers of density less than 0.90 g/cm$^3$) to end of melting. Using the second heating curve, calculate the "room temperature" heat of fusion (J/g) from 23° C. (room temperature) to end of melting by dropping perpendicular at 23° C. Measure and report "total crystallinity" (computed from "total" heat of fusion) as well as "crystallinity at room temperature" (computed from "room temperature" heat of fusion). Crystallinity is measured and reported as percent (%) or weight percent (wt%) crystallinity from the test sample's second heating curve heat of fusion ($\Delta$Hf) and its normalization to the heat of fusion of 100% crystalline polyethylene, where % crystallinity or wt% crystallinity = (ΔHf*100%)/292 J/g, wherein ΔHf is as defined above, * indicates mathematical multiplication, / indicates mathematical division, and 292 J/g is a literature value of heat of fusion (ΔHf) for a 100% crystalline polyethylene.

Moisture Pick-Up Test Method. Measure moisture content of a test sample (Time 0). Then place the test sample in 70% relative humidity at room temperature (23° C.) for 48 hours, and measure moisture content in parts per million (ppm) after 2, 4, 8, 24, and 48 hours by Karl Fisher titration.

EXAMPLES

Comparative carrier resin 1 (CCR1): an ethylene/ethyl acrylate copolymer having a melt flow index 1.3 g/10 min., 85 wt% ethylenic content, 15 wt% ethyl acrylate comonomeric content, a density of 0.93 g/cm$^3$, and a monomodal MWD. By the Crystallinity Test Method parts (A) and (B), (CCR1) had a second heating curve heat of fusion (ΔH$_f$) of 84.2 J/g, and a corresponding crystallinity of 28.8 wt%. Available as product AMPLIFY™ EA 100 Functional Polymer from The Dow Chemical Company.

Constituent (A1) semi-crystalline polyolefin carrier resin 1: a HDPE having a density of 0.965 g/cc$^3$, a melt flow index of 7.5 to 8.5 g/10 min.; and a monomodal MWD. By the Crystallinity Test Method parts (A) and (B), (A1) had a second heating curve heat of fusion (ΔH$_f$) of 223.7 J/g, and a corresponding crystallinity of 76.6 wt%. Available as product AXELERON™ CX 6944 NT CPD from The Dow Chemical Company.

Constituent (B1): zinc oxide obtained as ZOCO-104 from Zochem.

Constituent (B2): organohalogen is 1,2-(pentabromophenyl)ethane, obtained as SAYTEX-8010 from Albermarle Corporation.

Flame retardant synergist compound: antimony trioxide (Sb2O3) obtained as BRIGHTSUN HB500 from Albermarle Corporation or HB Chemicals.

Constituent (E1): tetrakismethylene (3,5-di-tert-butyl-4-hydroxyhydrocinnamate) methane (IRGANOX-1010 FF).

Constituent (L1): poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) obtained as Chimassorb 944 from BASF.

(Hydrolyzable silyl group)-functional polyolefin prepolymer 1 (Host Polymer 1): reactor copolymer of 98.5 wt% ethylene and 1.5 wt% vinyltrimethoxysilane. Prepared by copolymerizing ethylene and vinyltrimethoxysilane in a tubular high pressure polyethylene reactor with a free radical initiator. Available as DFDA-5451 from The Dow Chemical Company.

Comparative Example 1 (CE1): comparative additive masterbatch composition. See composition and moisture pickup test results described in Tables 1 and 2 later.

Inventive Example 1 (IE1): inventive additive masterbatch composition. See composition and moisture pickup test results described in Tables 1 and 2 below.

Table 1: Compositions of CE1 and IE1.

| Ex. No. | CE1 | IE1 |
| --- | --- | --- |
| CCR1 | 19.55 | 0 |
| (A1) wt% | 0 | 19.55 |
| (B1) | 0 | 10.00 |
| (B2) | 45.00 | 40.00 |
| FR synergist | 35.00 | 30.00 |
| (E1) wt% | 0.05 | 0.05 |
| (L1) wt% | 0.40 | 0.40 |
| Total wt% | 100.00 | 100.00 |

Table 2: Moisture Pick-Up of CE1 and IE1.

| Ex. No. | CE1 | IE1 |
| --- | --- | --- |
| Time 0 | 35.3 | 22.2 |
| 2 hours | 50.9 | 19.9 |

(continued)

| Ex. No. | CE1 | IE1 |
|---------|-------|------|
| 4 hours | 81.45 | 24.1 |
| 8 hours | 68.2 | 26.9 |
| 24 hours | 94.6 | 63.6 |
| 48 hours | 107.1 | 45 |

Moisture pick-up data in Table 2 show that the comparative additive masterbatch composition, based on carrier resin that is EEA/HDPE, started with a higher moisture ($H_2O$) content (Time 0), and had a substantially higher moisture content after 48 hours exposure thereto. In beneficial contrast, the inventive additive masterbatch composition of IE1, based on semi-crystalline HDPE carrier resin, started with a much lower moisture content and had a much lower moisture content after 48 hours. Thus it can be concluded from the data that the inventive moisture-curable polyolefin composition comprising the inventive additive masterbatch will have lower moisture pickup and thus greater resistance to scorch (premature curing) compared to a comparative moisture-curable polyolefin composition comprising a comparative additive masterbatch composition.

## Claims

1. An additive masterbatch composition comprising (A) a semi-crystalline polyolefin carrier resin that consists essentially of any one of (i) to (v): (i) a semi-crystalline high density polyethylene having a density of from 0.930 to 0.970 $g/cm^3$; (ii) a semi-crystalline polypropylene; (iii) a semi-crystalline ethylene/propylene copolymer; (iv) a semi-crystalline poly(ethylene-co-alpha-olefin) copolymer; (v) a combination (e.g. mixture or blend) of any two or more of (i) and (iv); and the (A) semi-crystalline polyolefin carrier resin has a crystallinity of 76 $\pm$ 1 wt%, as determined by differential scanning calorimetry (DSC) according to ASTM D3418-15 or the Crystallinity Test Method described in the description; and an additive package comprising (B) a flame retardant; wherein (A) is 10 to 90 weight percent (wt%) and the additive package is from 90 to 10 wt% of total weight (100.00 wt%) of the additive masterbatch composition; wherein the (B) flame retardant comprises (B1) a mineral and wherein the additive masterbatch composition further comprises a flame retardant synergist compound which is antimony trioxide; and wherein the flame retardant synergist compound is distinct from the (B1) mineral in at least one aspect such as composition or function.

2. The additive masterbatch composition of claim 1 wherein the (A) semi-crystalline polyolefin carrier resin has any one of (i) to (x): (i) a density of at least 0.930 $g/cm^3$ and is a polyethylene or a density of 0.89 to 0.90 $g/cm^3$ and is a polypropylene; (ii) a crystallinity of 50 to < 100 wt% and is a polyethylene; (iii) a melt flow index (MFI) of 0.1 to 50 grams per 10 minutes (g/10 min.) at 190° C./2.16 kg load and is a polyethylene or a melt flow rate (MFR) of 0.5 to 50 g/10 min. at 230 C./2.16 kg load and is a polypropylene; (iv) a molecular weight distribution (MWD) that is monomodal; (v) a MWD that is bimodal; (vi) both (i) and (ii); (vii) both (i) and (iii); (viii) both (ii) and (iii); (ix) both (iv) and at least one of (i) to (iii); or (x) both (v) and at least one of (i) to (iii).

3. The additive masterbatch composition of claim 1 or 2 further comprising at least one additive selected from: (C) an acidic condensation catalyst; (D) a secondary diarylamine of formula (I): $(R^1-Ar)_2NH$ (I), wherein each Ar is benzene-1,4-diyl or both Ar are bonded to each other and taken together with the NH of formula (I) constitute a carbazol-3,6-diyl; and each $R^1$ is independently $(C_1-C_{20})$hydrocarbyl; (E) one or two second antioxidants, each having a structure different than formula (I) and each other; (F) a processing aid; (G) a colorant; (H) a metal deactivator; (I) an (unsaturated carbon-carbon bond)-free hydrolyzable silane; (J) a corrosion inhibitor; (K) a product of a reaction of (C) and (D); and (L) a hindered amine light stabilizer; and (M) a combination of (K) and any two or more of additives (C) to (J).

4. A moisture-curable polyolefin composition comprising the additive masterbatch composition of any one of claims 1 to 3 and a (hydrolyzable silyl group)-functional polyolefin prepolymer; wherein in the (hydrolyzable silyl group)-functional polyolefin prepolymer: (i) each hydrolyzable silyl group is independently a monovalent group of formula (II): $(R^2)_m(R^3)_{3-m}Si-$(II); wherein subscript m is an integer of 1, 2, or 3; each $R^2$ is independently H, HO-, $(C_1-C_6)$alkoxy, $(C_2-C_6)$carboxy, $((C_1-C_6)alkyl)_2N-$, $(C_1-C_6)alkyl(H)C=NO-$, or $((C_1-C_6)alkyl)_2C=NO-$; and each $R^3$ is independently $(C_1-C_6)$alkyl or phenyl; (ii) the polyolefin is polyethylene based, poly(ethylene-*co*-$(C_3-C_{40})$alpha-olefin)-based, or a combination thereof; or (iii) both (i) and (ii).

5. A method of making a moisture-curable polyolefin composition, the method comprising mixing a (hydrolyzable silyl group)-functional polyolefin prepolymer and a divided solid form of the additive masterbatch composition of any one of claims 1 to 3 so as to give a mixture; and melting or extruding the mixture so as to make the moisture-curable polyolefin composition.

6. A moisture-cured polyolefin composition that is a product of moisture curing the moisture curable polyolefin composition of claim 4, or the composition made by the method of claim 5, to give the moisture-cured polyolefin composition.

7. A manufactured article comprising a shaped form of the moisture-cured polyolefin composition of claim 6.

8. A coated conductor comprising a conductive core and a polymeric layer at least partially surrounding the conductive core, wherein at least a portion of the polymeric layer comprises the moisture-cured polyolefin composition of claim 6.

9. A method of conducting electricity, the method comprising applying a voltage across the conductive core of the coated conductor of claim 8 so as to generate a flow of electricity through the conductive core.

**Patentansprüche**

1. Additiv-Masterbatch-Zusammensetzung, umfassend (A) ein teilkristallines Polyolefinträgerharz, das im Wesentlichen aus einem beliebigen von (i) bis (v) besteht: (i) einem teilkristallinen Polyethylen hoher Dichte, das eine Dichte von 0,930 bis 0,970 g/cm$^3$ aufweist; (ii) einem teilkristallinen Polypropylen; (iii) einem teilkristallinen Ethylen/Propylen-Copolymer; (iv) einem teilkristallinen Poly(ethylen-Co-Alpha-Olefin)-Copolymer; (v) einer Kombination (z. B. Mischung oder Blend) aus beliebigen zwei oder mehr von (i) und (iv); und wobei das (A) teilkristalline Polyolefinträgerharz eine Kristallinität von 76 $\pm$ 1 Gew.-% aufweist, wie mittels Differentialscanningkalorimetrie (DSC) gemäß ASTM D3418-15 oder des in der Beschreibung beschriebenen Kristallinitätsprüfverfahrens bestimmt; und ein Additivpaket, umfassend (B) einen Flammhemmer; wobei (A) 10 bis 90 Gewichtsprozent (Gew.-%) beträgt und das Additivpaket 90 bis 10 Gew.-% eines Gesamtgewichts (100,00 Gew.-%) der Additiv-Masterbatch-Zusammensetzung beträgt; wobei der (B) Flammhemmer (B1) ein Mineral umfasst und wobei die Additiv-Masterbatch-Zusammensetzung ferner eine flammhemmende synergistische Verbindung, die Antimontrioxid ist, umfasst; und wobei die flammhemmende synergistische Verbindung in mindestens einem Aspekt, wie Zusammensetzung oder Funktion, von dem (B1) Mineral verschieden ist.

2. Additiv-Masterbatch-Zusammensetzung nach Anspruch 1, wobei das (A) teilkristalline Polyolefinträgerharz ein beliebiges von (i) bis (x) aufweist: (i) eine Dichte von mindestens 0,930 g/cm$^3$ und ein Polyethylen ist oder eine Dichte von 0,89 bis 0,90 g/cm$^3$ und ein Polypropylen ist; (ii) eine Kristallinität von 50 bis < 100 Gew.-% und ein Polyethylen ist; (iii) einen Schmelzflussindex (MFI) von 0,1 bis 50 Gramm pro 10 Minuten (g/10 Min.) bei 190 °C/2,16 kg Belastung und ein Polyethylen ist oder eine Schmelzflussrate (MFR) von 0,5 bis 50 g/10 Min. bei 230 C/2,16 kg Belastung und ein Polypropylen ist; (iv) eine Molekulargewichtsverteilung (MWD), die monomodal ist; (v) eine MWD, die bimodal ist; (vi) sowohl (i) als auch (ii); (vii) sowohl (i) als auch (iii); (viii) sowohl (ii) als auch (iii); (ix) sowohl (iv) als auch mindestens eines von (i) bis (iii); oder (x) sowohl (v) als auch mindestens eines von (i) bis (iii).

3. Additiv-Masterbatch-Zusammensetzung nach Anspruch 1 oder 2, ferner umfassend mindestens ein Additiv, ausgewählt aus: (C) einem Säurekondensationskatalysator; (D) einem sekundären Diarylamin von Formel (I): $(R^1\text{-Ar})_2NH$ (I), wobei jedes Ar Benzol-1,4-diyl ist oder beide Ar aneinander gebunden sind und mit dem NH von Formel (I) zusammengenommen ein Carbazol-3,6-diyl bilden; und jedes $R^1$ unabhängig voneinander $(C_1\text{-}C_{20})$-Kohlenwasserstoff ist; (E) einem oder zwei zweiten Antioxidantien, die jeweils eine Struktur, die sich von Formel (I) und voneinander unterscheidet, aufweisen; (F) einer Verarbeitungshilfe; (G) einem Farbmittel; (H) einem Metalldeaktivator; (I) einem (ungesättigte Kohlenstoff-Kohlenstoff-Bindung)-freien hydrolysierbaren Silan; (J) einem Korrosionsinhibitor; (K) einem Produkt einer Reaktion von (C) und (D); und (L) einem Lichtstabilisator aus sterisch gehindertem Amin; und (M) einer Kombination von (K) und beliebigen zwei oder mehr Additiven (C) bis (J).

4. Feuchtigkeitshärtbare Polyolefinzusammensetzung, umfassend die Additiv-Masterbatch-Zusammensetzung nach einem der Ansprüche 1 bis 3 und ein (hydrolysierbare Silylgruppe)-funktionelles Polyolefinpräpolymer; wobei in dem (hydrolysierbare- Silylgruppe)-funktionellen Polyolefinpräpolymer: (i) jede hydrolysierbare Silylgruppe unabhängig voneinander eine einwertige Gruppe von Formel (II) ist: $(R^2)_m(R^3)_{3-m}Si$-(II); wobei Index m eine ganze Zahl von 1, 2 oder 3 ist; jedes $R^2$ unabhängig voneinander H, HO-, $(C_1\text{-}C_6)$-Alkoxy, $(C_2\text{-}C_6)$-Carboxy, $((C_1\text{-}C_6)\text{-Alkyl})_2N$-,

$(C_1-C_6)$-Alkyl(H)C=NO- oder $((C_1-C_6)$-Alkyl$)_2$C=NO- ist; und jedes $R^3$ unabhängig voneinander $(C_1-C_6)$-Alkyl oder Phenyl ist; (ii) das Polyolefin auf Polyethylenbasis, auf Poly(ethylen-Co-$(C_3-C_{40})$-Alpha-Olefin)-Basis oder eine Kombination davon ist; oder (iii) sowohl (i) als auch (ii).

5. Verfahren zum Herstellen einer feuchtigkeitshärtbaren Polyolefinzusammensetzung, das Verfahren umfassend Mischen eines (hydrolysierbare Silylgruppe)-funktionellen Polyolefinpräpolymers und einer geteilten festen Form der Additiv-Masterbatch-Zusammensetzung nach einem der Ansprüche 1 bis 3, um eine Mischung zu ergeben; und Schmelzen oder Extrudieren der Mischung, um die feuchtigkeitshärtbare Polyolefinzusammensetzung herzustellen.

6. Feuchtigkeitsgehärtete Polyolefinzusammensetzung, die ein Produkt einer Feuchtigkeitshärtung der feuchtigkeitshärtbaren Polyolefinzusammensetzung nach Anspruch 4 oder der Zusammensetzung ist, die mittels des Verfahrens nach Anspruch 5 hergestellt wird, um die feuchtigkeitsgehärtete Polyolefinzusammensetzung zu ergeben.

7. Gefertigter Artikel, umfassend eine geformte Form der feuchtigkeitsgehärteten Polyolefinzusammensetzung nach Anspruch 6.

8. Beschichteter Leiter, umfassend einen leitfähigen Kern und eine polymere Schicht, die den leitfähigen Kern mindestens teilweise umgibt, wobei mindestens ein Abschnitt der polymeren Schicht die feuchtigkeitsgehärtete Polyolefinzusammensetzung nach Anspruch 6 umfasst.

9. Verfahren zum Leiten von Elektrizität, das Verfahren umfassend ein Anlegen einer Spannung über den leitfähigen Kern des beschichteten Leiters nach Anspruch 8, um einen Fluss von Elektrizität durch den leitfähigen Kern zu generieren.

**Revendications**

1. Composition de mélange-maître d'additif comprenant une résine (A) de support de polyoléfine semi-cristalline qui consiste essentiellement en l'un quelconque de (i) à (v) : (i) un polyéthylène semi-cristallin haute densité ayant une masse volumique allant de 0,930 à 0,970 g/cm$^3$ ; (ii) un polypropylène semi-cristallin ; (iii) un copolymère d'éthylène/propylène semi-cristallin ; (iv) un copolymère de poly(éthylène-co-alpha-oléfine) semi-cristallin ; (v) une combinaison (par exemple, mélange ou mélange homogène) de deux quelconques de (i) et (iv) ou plus ; et la résine (A) de support de polyoléfine semi-cristalline a une cristallinité de $76 \pm 1$ % en poids, telle que déterminée par calorimétrie différentielle à balayage (DSC) selon la norme ASTM D 3418-15 ou la méthode d'essai de cristallinité décrite dans la description ; et un ensemble d'additif comprenant un ignifugeant (B) ; dans laquelle (A) représente de 10 à 90 pour cent en poids (% en poids) et l'ensemble d'additif représente de 90 à 10 % en poids de poids total (100,00 % en poids) de la composition de mélange-maître d'additif ; dans laquelle l'ignifugeant (B) comprend un minéral (B1) et dans laquelle la composition de mélange-maître d'additif comprend en outre un composé synergique ignifugeant qui est du trioxyde d'antimoine ; et dans laquelle le composé synergique ignifugeant est distinct du minéral (B1) dans au moins un aspect tel que la composition ou la fonction.

2. Composition de mélange-maître d'additif selon la revendication 1 dans laquelle la résine (A) de support de polyoléfine semi-cristalline possède l'un quelconque de (i) à (x) : (i) une masse volumique d'au moins 0,930 g/cm$^3$ et est un polyéthylène ou une masse volumique de 0,89 à 0,90 g/cm$^3$ et est un polypropylène ; (ii) une cristallinité de 50 à < 100 % en poids et est un polyéthylène ; (iii) un indice de fluidité à chaud (MFI) de 0,1 à 50 grammes pour 10 minutes (g/10 min) à 190 °C/charge de 2,16 kg et est un polyéthylène ou un taux de fluidité à chaud (MFR) de 0,5 à 50 g/10 min à 230 °C/charge de 2,16 kg et est un polypropylène ; (iv) une distribution des masses moléculaires (MWD) qui est monomodale ; (v) une MWD qui est bimodale ; (vi) à la fois (i) et (ii) ; (vii) à la fois (i) et (iii) ; (viii) à la fois (ii) et (iii) ; (ix) à la fois (iv) et au moins l'un de (i) à (iii) ; ou (x) à la fois (v) et au moins l'un de (i) à (iii).

3. Composition de mélange-maître d'additif selon la revendication 1 ou 2 comprenant en outre au moins un additif choisi parmi : (C) un catalyseur de condensation acide ; (D) une diarylamine secondaire de formule (I) : $(R^1\text{-}Ar)2NH$ (I), dans laquelle chaque Ar est benzène-1,4-diyle ou les deux Ar sont liés l'un à l'autre et, pris conjointement avec le NH de formule (I), constituent un carbazo-3,6-diyle ; et chaque $R^1$ est indépendamment hydrocarbyle en $C_1-C_{20}$ ; (E) un ou deux seconds antioxydants, chacun ayant une structure différente de la formule (I) et l'un de l'autre ; (F) un auxiliaire de traitement ; (G) un colorant ; (H) un désactivateur de métaux ; (I) un silane hydrolysable exempt de liaison carbone-carbone insaturée ; (J) un inhibiteur de corrosion ; (K) un produit d'une réaction de (C) et (D) ; et (L) un photostabilisant amine encombrée ; et (M) une combinaison de (K) et deux quelconques des additifs (C) à (J) ou plus.

4. Composition de polyoléfine durcissable à l'humidité comprenant la composition de mélange-maître d'additif selon l'une quelconque des revendications 1 à 3 et un prépolymère de polyoléfine à fonctionnalité groupe silyle hydrolysable ; dans laquelle dans le prépolymère de polyoléfine à fonctionnalité groupe silyle hydrolysable : (i) chaque groupe silyle hydrolysable est indépendamment un groupe monovalent de formule (II) : $(R^2)_m(R^3)_{3-m}Si-$ (II) ; dans laquelle l'indice m est un nombre entier de 1, 2, ou 3 ; chaque $R^2$ est indépendamment H, HO-, alcoxy en $C_1$-$C_6$, carboxy en $C_2$-$C_6$, (alkyl en $C_1$-$C_6$)$_2$N-, (alkyl en $C_1$-$C_6$)(H)C=NO-, ou (alkyl en $C_1$-$C_6$)$_2$C=NO- ; et chaque $R^3$ est indépendamment alkyle en $C_1$-$C_6$ ou phényle ; (ii) la polyoléfine est à base de polyéthylène, à base de poly(éthylène-co-alpha-oléfine en $C_3$-$C_{40}$), ou une combinaison de ceux-ci ; ou (iii) à la fois (i) et (ii).

5. Procédé de fabrication d'une composition de polyoléfine durcissable à l'humidité, le procédé comprenant le mélange d'un prépolymère de polyoléfine à fonctionnalité groupe silyle hydrolysable et d'une forme solide divisée de la composition de mélange-maître d'additif selon l'une quelconque des revendications 1 à 3 de façon à donner un mélange ; et la fusion ou l'extrusion du mélange de façon à fabriquer la composition de polyoléfine durcissable à l'humidité.

6. Composition de polyoléfine durcie à l'humidité qui est un produit de durcissement à l'humidité de la composition de polyoléfine durcissable à l'humidité selon la revendication 4, ou de la composition fabriquée par le procédé selon la revendication 5, pour donner la composition de polyoléfine durcie à l'humidité.

7. Article manufacturé comprenant une forme façonnée de la composition de polyoléfine durcie à l'humidité selon la revendication 6.

8. Conducteur revêtu comprenant une âme conductrice et une couche polymère entourant au moins partiellement l'âme conductrice, dans lequel au moins une partie de la couche polymère comprend la composition de polyoléfine durcie à l'humidité selon la revendication 6.

9. Procédé de conduction d'électricité, le procédé comprenant l'application d'une tension aux bornes de l'âme conductrice du conducteur revêtu selon la revendication 8 de façon à générer un flux d'électricité à travers l'âme conductrice.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6936655 B2, J.S. Borke
- EP 2889323 A1, S. Deveci
- US 2008023680 A
- WO 2016142544 A
- EP 1072644 A
- WO 2004087805 A
- US 2012101209 A
- EP 501340 A
- US 2008119605 A
- US 20080176981 A1, M. Biscoglio
- WO 2014014648 A2
- US 5066752 A
- US 7851558 B2
- US 6936655 B
- WO 2006017391 A
- EP 0736065 A
- US 6441097 B
- US 6936671 B
- WO 2015149634 A1

### Non-patent literature cited in the description

- *Polymer Degradation and Stability,* 1989, vol. 25 (1), 1-9
- *CHEMICAL ABSTRACTS,* 1195978-93-8
- *CHEMICAL ABSTRACTS,* 65447-77-0
- *CHEMICAL ABSTRACTS,* 71878-19-8
- *CHEMICAL ABSTRACTS,* 70624-18-9